# EUROPEAN PATENT APPLICATION

(11) **EP 1 380 924 A1**
(43) Date of publication of application: **14.01.2004**
(21) Application number: 02713221.6
(22) Date of filing: 28.03.2002
(51) Int. Cl.: G06F 3/023, A63F 13/06, H01H 23/16, G05G 1/04, G05G 5/05

(54) **CONTROLLER**

(30) Priority: 19.04.2001 JP 2001120679
(71) Applicant: Sony Computer Entertainment Inc., Tokyo 107-0052 (JP)
(72) Inventor: TANAKA, Makoto, c/o SONY COMP. ENTERTAINMENT INC., Minato-ku, Tokyo 107-0052 (JP)
(74) Representative: Turner, James Arthur
(86) International application number: PCT/JP2002/003066
(87) International publication number: WO 2002/086693

(57) **Abstract**

A controller has a seesaw-type input lever with two operating parts operated by two fingers. Pressing one operating part causes rotation of the lever in one direction and pressing the other operating part causes rotation of the lever in the other direction. As a result, accurate rotational positioning of the input lever can be obtained by adjusting the pressing force on the left and right operating parts.

## Description

### TECHNICAL FIELD

The present invention relates to a controller for operating a seesaw-type input lever for making analog input.

### BACKGROUND ART

A game actuating device (game controller) was disclosed in, for example, the Japanese laid-open patent application publication H11-90042. This controller, which is a two-hand grip-type controller, has actuators, such as various operating buttons, on its upper surface and front surface, and grips extending rearward from two ends of the main controller unit which are grasped by both hands, in which grasped condition the fingertips of the left and right hands (for example, thumbs, index fingers, and middle fingers) operate the above-noted actuators.

With a game controller of this type, each pushbutton is pressed by a single finger. For example, the index finger presses and releases a button. In general, the human fingers are well suited to simple pressing and releasing actions, but not suited to fine controlling of pressing force, so that it may be difficult to accurately control an actuator for operating an analog input.

Thus, in the case of the analog input, there is difficulty in accurately controlling one actuator such as a pushbutton with a single finger, which may cause unsuccessful control of a game character in such a time when the game character is operated, for example.

Accordingly, the present invention was made with the above-noted drawbacks in the conventional technology in mind, and has as an object to provide a controller which achieves highly accurate control of an actuator.

### DISCLOSURE OF THE INVENTION

According to the present invention, a seesaw-type input lever is provided, this lever having two operating parts so that, when one of the operating parts is pressed, the input lever rotates in one direction, and when the other operating part is pressed, the input lever rotates in the other direction. The two operating parts can be operated by either two or one finger, fine control being performed by appropriately adjusting the pressing force thereon.

The rotational directional position of the input lever when pressing on an operating part causes the input lever to rotate is detected, for example, by a rotational position detecting mechanism, such as a potentiometer. In order to restore the input lever to a prescribed reference position after a rotation operation, a spring or the like may be mounted to the lever, this spring being part of a lever reference position restoring mechanism which restores the input lever to a reference position.

Thus, in the present invention, a seesaw-type input lever is provided with the two operating parts to be operated and adjusted in the pressing force on each, which allows highly accurate controlling thereof as well as positioning of the rotating direction thereof, improving analog input with a two-hand grip-type controller, which was difficult in the past. Furthermore, in the case of a joystick, the operation amount thereof increases. However, it decreases according to the present invention, enabling fine controlling with small operation amount.

### BRIEF DESCRIPTION OF THE DRAWINGS

Fig. 1 is a drawing showing the general configuration of an entertainment system;
Fig. 2 is a plan view of an example of a controller;
Fig. 3 is a plan view of an input lever mounted to the main controller unit shown in Fig. 2;
Fig. 4 is a plan view of the input lever in the condition in which it is rotated by pressing inward on one operating part;
Fig. 5 is a plan view of the input lever in which force feedback is implemented;
Fig. 6 is a plan view of a controller showing an example in which grips are provided at two ends of the main controller unit;
Fig. 7 is a perspective view of the main parts of a controller enabling lever operation by two fingers of one hand;
Fig. 8A is a perspective view of an input lever in which two operating parts can be operated by one finger; and
Fig. 8B is a plan view of the input lever in which the two operating parts can be operated by one finger.

### BEST MODE FOR CARRYING OUT THE INVENTION

### General Description of the Embodiment

In an embodiment of the present invention, used is a seesaw-type input lever having two operating parts such that when one operating part is pressed the lever rotates in one direction, and when the other operating part is pressed the lever rotates in the other direction. By operating the two operating parts of the input lever by either two fingers or one finger so as to appropriately adjust a pressing force in one direction or the other direction, it is possible to perform high-accuracy control, thereby achieving an improvement in analog input. A controller according to the present invention is described below, taking the example of an entertainment system constituted by connecting the controller to an entertainment apparatus.

### General Configuration of the Entertainment System

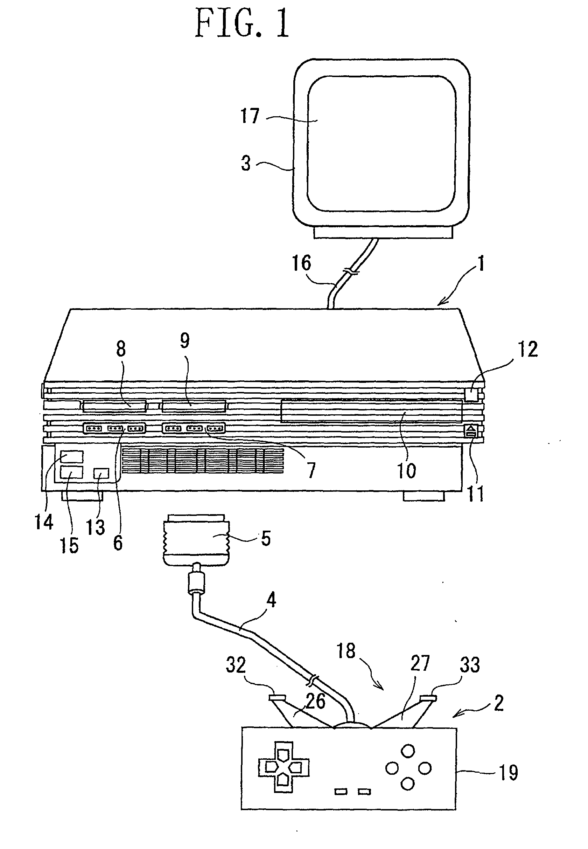

The entertainment system, as shown in Fig. 1, is made up of an entertainment apparatus 1 which executes various video games, creates and edits e-mail, browses the Web, and may also playback or the like of movies and music; a controller 2 connected to the entertainment apparatus 1 which serves as an operating terminal; and a TV monitor 3 which displays game contents, e-mail, Web pages, or movies and the like, and which also outputs sound.

### Entertainment Apparatus

The entertainment apparatus 1 executes a game application program read out from an optical disc, such as a CD-ROM or DVD-ROM, or from a semiconductor memory, or a game application program downloaded via various communication circuits, such as a telephone line, a LAN, a cable TV circuit, or a communication satellite circuit. The entertainment apparatus also executes instructions from a player received via the controller 2, and can create and edit e-mail, and perform various processes for browsing Web pages, as well as play back (decode) video and audio data, such as audio data recorded on a CD, or video and audio data of a movie recorded on a DVD.

On the front surface of the entertainment apparatus 1 are provided two controller ports 6 and 7 which enable removable connection of a connector 5 provided on the end of a cable 4 to be connected to the controller 2; memory card slots 8 and 9 into which a memory card (not shown in the drawing) may be removably inserted; a disc tray 10 into which an optical disc, such as a DVD-ROM or a CD-ROM, may be loaded; an open/close button 11 for opening and closing the disc tray 10; an on/standby/reset button 12 for switching the power supply on and off, setting the standby condition, and resetting a game; an IEEE (Institute of Electrical and Electronics Engineers) 1394 connector 13; and two USB (Universal Serial Bus) connectors 14 and 15.

On the rear surface of the entertainment apparatus 1 are provided a power supply switch, an audio/video output connector (AV multi-output connector), a PC card slot, an optical digital output connector, and an AC power inlet, none of which are illustrated.

### TV Monitor

The TV monitor 3 is connected via a cable 16 to the audio/video output connector provided on the rear surface of the entertainment apparatus 1. The monitor screen 17 of the TV monitor 3 displays the content of a game, e-mail, Web pages, movies or the like. Sound of a game or the like is output from a speaker (not shown) of the TV monitor 3.

### Controller

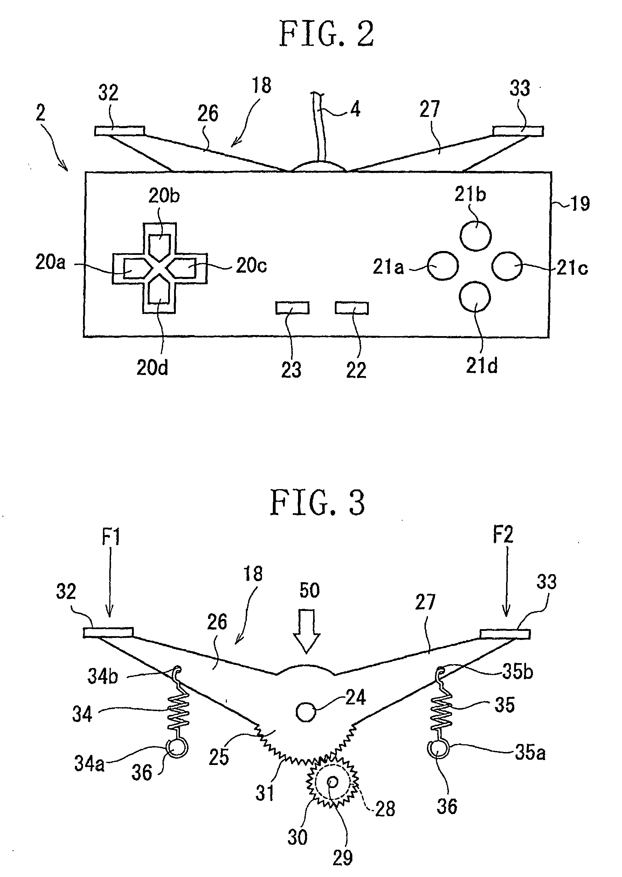

The controller 2, as shown in Fig. 1 and Fig. 2, has a main controller unit 19 which is provided with various operating buttons and with an input lever 18 used to make analog input. The main controller unit 19 is formed as an enclosure of a size that enables an operator to grip and operate it with both hands.

On the upper left surface of the main controller unit 19 are provided up, down, left, and right user-operated directional command keys 20a, 20b, 20c, and 20d which are used, for example, to move a game character upward, downward, leftward, and rightward in a video game; to move a character input cursor upward, downward, leftward, and rightward on an e-mail creation screen; and to perform page scrolling and movement of a cursor upward, downward, leftward, and rightward on a Web page. These up, down, left, and right directional command keys 20a, 20b, 20c, and 20d are operated, for example, by the left thumb when the main controller unit 19 is gripped by two hands.

On the upper right surface of the main controller unit 19 are provided four command buttons 21a, 21b, 21c, and 21d assigned with each different function by, for example, an application program. These command buttons 21a, 21b, 21c, and 21d are assigned with, for example, functions for specifying display of a menu, for commanding cancellation or the like of a selected item, for commanding execution a selected item, and for commanding either display or non-display of a table of contents or the like.

On the upper center surface of the main controller unit 19 are provided a start button 22 used for starting a game, starting display of an e-mail screen, starting play of a movie or music, and pausing, and a select button 23 used for causing display of a menu display or an operating panel on the TV monitor 17.

The input lever 18, as shown in Fig. 2 and Fig. 3, is a substantially V-shaped seesaw-type lever having a lever proximal end part 25 rotatably mounted about a rotational support shaft 24 provided in the main controller unit 19, a first arm 26 extending in one direction from the proximal end part 25, and a second arm 27 extending in another direction from the lever proximal end part 25. When the input lever 18 is mounted to the main controller unit 19, the first arm 26 and the second arm 27 extend outside of the main controller unit 19.

The lever proximal end part 25 is substantially round, and has at its lower peripheral edge an output gear 31. The output gear 31 is designed to mesh with a potentiometer gear 30 mounted to a rotational shaft 29 of a potentiometer 28 which is a rotational position detection mechanism, to be described below.

The first arm 26 in Fig. 3 is provided so that it extends upwardly at an angle to the left from the lever proximal end part 25, the width of the first arm 26 becoming gradually narrower in the direction from the base end side to the tip side. Similarly, the second arm 27 in Fig. 3 is provided so that it extends upwardly at an angle to the right from the lever proximal end part 25, the width of the second arm 27 becoming gradually narrower in the direction from the base end side to the tip side. Finger-operated operating parts 32 and 33 are provided on the ends of the first and second arms 26 and 27.

Springs 34 and 35 are mounted to the first and second arms 26 and 27, these springs 34 and 35 serving as a lever reference position restoring means for restoring the input lever 18 to a prescribed reference position. The springs 34 and 35 each have one end 34a and 35a, respectively, which is fixed to a spring fixing member 36 to be provided on the main controller unit 19. The other ends 34b and 35b, respectively, are fixed to the first and second arms 26 and 27, respectively. The reference position of the input lever 18 is, for example, the condition in which the springs 34 and 35 mounted to the first arm 26 and the second arm 27 are balanced. Fig. 2 shows the condition in which the input lever 18 is balanced, with the operating parts 32 and 33 horizontal.

A potentiometer 28, serving as a rotational position detection mechanism that meshes with the output gear 31, detects the rotational position of the input lever 18, and is mounted to the main controller unit 19. The rotational shaft 29 of the potentiometer 28 is mounted with the potentiometer gear 30 which meshes with the output gear 31.

The input lever 18 is such that it can be pressed in the direction indicated by the arrow 50 in Fig. 3, the pushing in of the input lever 18 performing on/off operation of a switch.

### Input Lever Operation

In order to operate the input lever 18 with the main controller unit 19 grasped by both hands, the index finger or middle finger of the left hand presses the operating part 32 provided on the end of the first arm 26 protruding towards the outside from the main controller unit 19, and the index finger or middle finger of the right hand presses the operating part 33 provided on the end of the second arm 27 protruding towards the outside from the main controller unit 19. The rotational position of the input lever 18 is established by appropriately adjusting the pressing force of the two fingers.

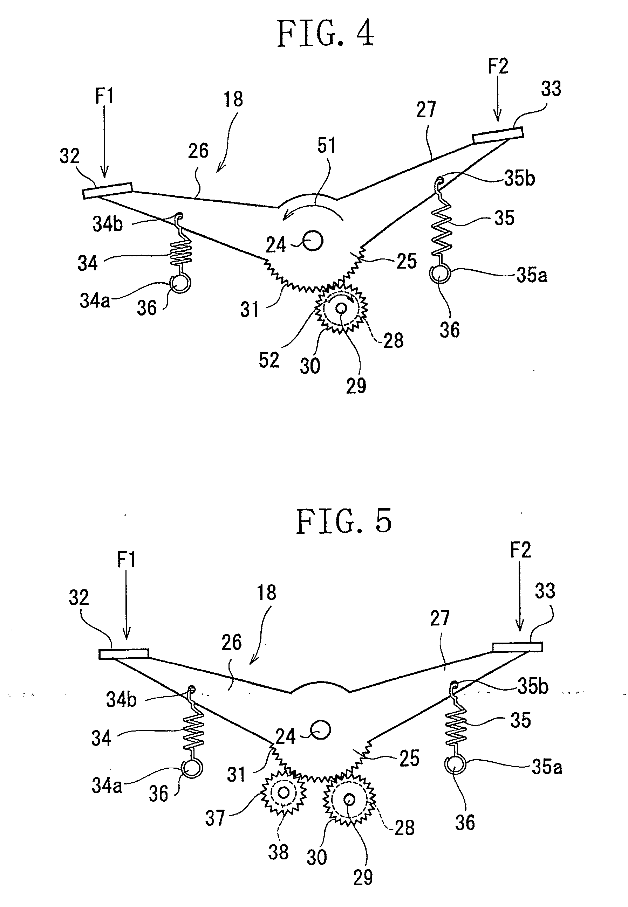

For example, beginning at the reference position of Fig. 3, if the operating part 32 of the first arm 26 is pressed with a pressing force of F1 which is larger than the pressing force F2 on the operating part 33 of the second arm 27 (F1>F2), the input lever 18 will rotate about the rotational support shaft 24 to the left, indicated by the arrow 51 in Fig. 4. When this occurs, the effect of the rotation of the input lever 18 is that potentiometer gear 30 meshing with the output gear 31 rotates to the right, indicated by the arrow 52 in Fig. 4. This rotation of the potentiometer gear 30 is transmitted to the potentiometer 28, and is then converted thereat into an electrical signal. The thus converted electrical signal is transmitted to the entertainment apparatus 1 via the cable 4.

In this manner, by adjusting the pressing force on the two operating parts 32 and 33 of the seesaw-type input lever 18 with the left and right fingers, it is possible to perform adjustment of the rotational position of the input lever 18 with high accuracy. That is, operating the input lever 18 by two fingers makes it possible to perform fine adjustment of the input lever 18, thereby allowing for, for example, manipulating a character or the like controlled by the input lever 18 precisely as desired. Since the input lever 18 is a seesaw-type lever, the amount of operation is small compared to the case of a joystick.

As illustrated by Fig. 4, if the force pressing on the left and right operating parts 32 and 33 of the input lever 18 is weakened in the condition where the input lever 18 tilts towards the left, the action of the springs 34 and 35 mounted to the first and second arms 26 and 27, respectively, is to restore the input lever 18 to the reference position shown in Fig. 2.

### Other Embodiments

Fig. 5 shows an example of providing force feedback by providing the main controller unit 19 with a drive motor 38 to which is mounted a drive gear 37 so as to mesh with the output gear 31, this drive motor 38 being driven so as to cause the input lever 18 to rotate, thereby achieving force feedback.

In this embodiment, the drive motor 38 with the drive gear 37 is mounted to the main controller unit 19 at a position where it does not make contact with the potentiometer 28, the drive gear 37 meshing with the output gear 31 provided on the lever proximal end part 25.

By adopting the above-described arrangement, if, for example, the input lever 18 is rotated to the left by pressing on the operating part 32 of the first arm 26 with a force greater than that on the operating part 33 of the second arm 27, and the forces on the operating parts 32 and 33 are then released, the restoring forces of the springs 34 and 35 act on the input lever 18 so as to immediately return the input lever 18 to the reference position, and it is possible to use the drive motor 38 to cause the force acting so as to immediately return the input lever 18 to act gradually on the input lever 18.

If a rotationally controllable stepping motor is used as the drive motor 38, it is possible to return the input lever 18 to the reference position using the stepping motor, thereby eliminating the need to mount the springs 34 and 35 to the first and second arms 26 and 27.

It is further possible to combine the drive motor 38 and the potentiometer 28. That is, the potentiometer gear 30 mounted to the potentiometer 28 may be meshed with the drive gear 37 of the drive motor 38, but, in this event, would not be meshed with the output gear 31.

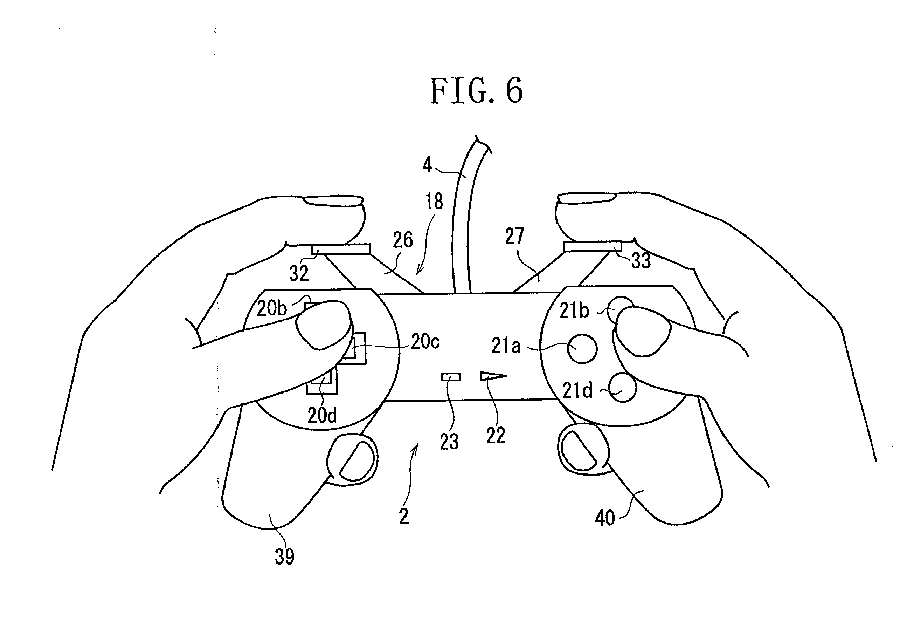

Fig. 6 shows an example of a controller 2 having a left grip 39 serving as a left grip part and a right grip 40 serving as a right grip part, these grips extending rearward from each end of the main controller unit 19. The left grip 39 and the right grip 40 are formed so as to be gripped and held within the palms of the operator operating the controller 2, thereby enabling stable operation of the controller 2.

In a controller 2 having left and right grips 39 and 40 as noted above, it is possible to perform finer control of the operation of the input lever 18, thereby improving the analog input of a two-hand grip-type controller, which was difficult in the past.

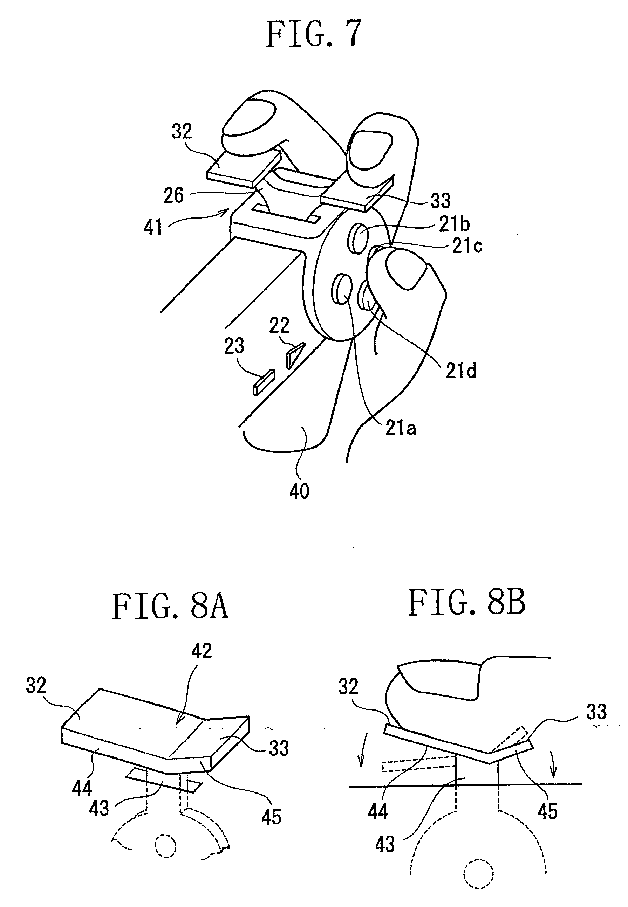

Fig. 7 shows an example of a controller enabling operation of the input lever 18 using two fingers of one hand. This controller 2 is provided with an input lever 41 located on the end part having the plurality of command buttons 21a, 21b, 21c, and 21d, the input lever 41 having a similar configuration to the input lever 18 of Fig. 3, which is a seesaw-type, and being operable by two fingers (for example, the index and middle finger) of one hand.

This type of controller 2, similar to the controller 2 shown in Fig. 1 to Fig. 6 which is operated by fingers of both hands, enables high-accuracy rotational positioning of the input lever 18 by adjusting the pressing force of the middle finger and index finger pressing on the operating parts 32 and 33, respectively.

Fig. 8A and Fig. 8B show an example of an input lever 42 in which, rather than pressing the operating parts 32 and 33 with two fingers, a single finger is used to press and operate the two operating parts 32 and 33.

This type of input lever 42, as shown in Fig. 8A, has a lever proximal end part 43 rotatably mounted to the main controller unit, which has an output gear (not shown in the drawing) at its bottom end that meshes with the potentiometer gear 30, a first arm 44 and a second arm 45 together forming a substantially V-shaped element attached to the lever proximal end part 43. In this embodiment, the ends of the first and second arms 44 and 45 serve as the operating parts 32 and 33 of a seesaw-type lever.

In order to operate this input lever 42, as shown in Fig. 8B, the pad of the thumb is brought up against the first arm 44 and the second arm 45, and the thumb is rocked forward and back to operate the lever. In this type of the input lever 42, similarly to all of the previously described input levers 18, by adjusting the pressing force imparted to the operating parts 32 and 33 in the ends of the first and second arms 44 and 45, it is possible to perform accurate rotational positioning of the input lever 42.

The above-described embodiments all apply the present invention to a game controller, however, it will be understood that the present invention is not limited in application to game controllers.

### INDUSTRIAL APPLICABILITY

The present invention is applicable, for example, to a game controller connected to a video game machine, used for operating an object including a game character in a video game.

## Claims

1. A controller, comprising:
a seesaw-type input lever, having two finger-operated operating parts, wherein pressing one of the operating parts causing rotation of the lever in one direction, and pressing the other operating part causing rotation of the lever in the other direction;
a lever mounting member having a rotational shaft which rotatably supports the input lever;
means for detecting a rotational position of the input lever; and
means for restoring the input lever to a prescribed reference position.

2. The controller according to claim 1, wherein the input lever comprises:
a lever proximal end part free to rotate about the rotational shaft as a center;
a first arm extending in one direction from the lever proximal end part; and
a second arm extending in the other direction from the lever proximal end part, each of the first arm and the second arm having the operating part.

3. The controller according to claim 2, wherein the means for detecting the rotational position includes a potentiometer which meshes with a gear formed on the lever proximal end part and which detects the rotational position of the input lever.

4. The controller according to claim 3, further comprising:
a drive mechanism, which meshes with the gear formed on the lever proximal end part and which provides the rotational position of the input lever.

5. The controller according to any one of claims 1 to 4, wherein
the means for restoring the input lever comprises springs attached respectively to the first arm and the second arm.

6. The controller according to claim 4, wherein
the drive mechanism comprises a stepping motor which meshes with the gear formed on the lever proximal end part.

7. The controller according to any one of claims 2 to 6, wherein
the first arm and second arm extend toward the outside of the lever mounting member, the first and second arms having the operating part on each end thereof.
